# EUROPÄISCHE PATENTSCHRIFT

(11) **EP 4 002 680 B1**
(45) Veröffentlichungstag und Bekanntmachung des Hinweises auf die Patenterteilung: **20.09.2023**
(21) Anmeldenummer: 21204267.5
(22) Anmeldetag: 22.10.2021
(51) Int. Cl.: H02P 29/024, B60J 5/06, B61D 19/00, B61D 19/02

(54) **VERFAHREN UND SYSTEM ZUR ZUSTANDSBASIERTEN INSTANDHALTUNG EINER ZUGANGSVORRICHTUNG**
METHOD AND SYSTEM FOR STATUS-BASED MAINTENANCE OF ACCESS DEVICE
PROCÉDÉ ET SYSTÈME DE MAINTENANCE BASÉE SUR L'ÉTAT D'UN DISPOSITIF D'ACCÈS

(30) Priorität: 18.11.2020 DE 102020130512
(43) Veröffentlichungstag der Anmeldung: 25.05.2022
(73) Patentinhaber: Bode - Die Tür GmbH, 34123 Kassel (DE)
(72) Erfinder: Andler, Daniel, 34266 Niestetal (DE)
(74) Vertreter: Patentanwälte Bauer Vorberg Kayser

(56) Entgegenhaltungen:
- EP-A1- 1 233 898
- EP-A1- 3 235 990
- EP-A1- 3 236 330
- GB-A- 2 472 297

## Beschreibung

Die Erfindung betrifft ein Verfahren zur zustandsbasierten Instandhaltung einer Zugangsvorrichtung eines Fahrzeugs sowie ein System zur zustandsbasierten Instandhaltung einer Zugangsvorrichtung eines Fahrzeugs.

Grundsätzlich erfolgt bei praktisch allen technischen Vorrichtungen mit zunehmender Betriebsdauer eine Degradation, welche über kurz oder lang zu einem Ausfall und damit dazu führt, dass die Vorrichtung insgesamt oder wesentliche Teile der Vorrichtung repariert oder ausgetauscht werden müssen, bevor ein Weiterbetrieb der Vorrichtung möglich und erlaubt ist. Besonders ungünstig ist ein solcher Ausfall, wenn er überraschend auftritt und damit sowohl den laufenden Betrieb unterbricht als auch für die Dauer der Reparatur oder des Austausches die Verwendung einer Ersatzvorrichtung zur Aufrechterhaltung des Betriebs erfordert. Sowohl die fehlende Antizipierbarkeit solcher Ausfälle als auch die resultierende Notwendigkeit, ein entsprechend großes Reservoir an Ersatzvorrichtungen vorzuhalten, führt zu hohen Kosten. Diese Problematik gilt auch und insbesondere im Bereich von Fahrzeugen des öffentlichen Personenverkehrs und dort speziell bezogen auf Zugangsvorrichtungen wie Tür- und Schiebetrittsysteme.

Dem obigen Problem wird einerseits versucht zu begegnen, indem betriebszeitmäßig bestimmte Serviceintervalle vorgesehen sind, nach denen jeweils einzelne Komponenten gewartet oder ausgetauscht werden sollen. Der bei der Berechnung der Serviceintervalle erforderliche Sicherheitsfaktor führt aber, wenn derartige Ausfälle zuverlässig verhindert werden sollen, dazu, dass die Wartungen tendenziell zu oft stattfinden und ggf. auch Teile ausgetauscht werden, welche an sich noch geraume Zeit vor einem Ausfall eingesetzt werden könnten.

Da die oben beschriebenen Degradationen regelmäßig auf an sich schleichend voranschreitende Vorgänge zurückgehen gibt es andererseits das Bestreben, durch Messung und Auswertung dieser schleichenden Vorgänge eine Vorhersage über einen drohenden Ausfall zu erhalten und damit in der Lage zu sein, die fragliche Komponente kurz vor dem Ausfall planmäßig warten oder austauschen zu können.

Bei Zugangsvorrichtungen von Fahrzeugen betrifft die zustandsbasierte Wartung insbesondere die elektrischen Motoren zum Antrieb von beweglichen Elementen der Zugangsvorrichtungen. Bei diesen elektrischen Motoren können insbesondere die elektrischen Betriebsgrößen vergleichsweise einfach gemessen oder ermittelt werden.

Es hat sich aber herausgestellt, dass speziell bei elektrischen Motoren die an sich entscheidende Größe das von dem Motor abgegebene Drehmoment ist. Denn auch nur kurzzeitige Spitzen des abgegebenen Drehmoments stellen eine besonders relevante Quelle von Beschädigungen und damit auch von Ausfällen dar. Allerdings ist das von dem Motor abgegebene Drehmoment praktisch nicht direkt zu messen und auch nicht anderweitig einfach zu ermitteln.

Zwar besteht ein physikalischer Zusammenhang zwischen dem Drehmoment und der von dem Motor aufgenommenen elektrischen Leistung, welche elektrische Leistung wiederum grundsätzlich durch die Messung elektrischer Größen ermittelt werden kann. Jedoch ist der Zusammenhang derart, dass ohne die Kenntnis weiterer Größen eine Ermittlung des Drehmoments kaum möglich ist.

Daher besteht die Aufgabe der vorliegenden Erfindung darin, ein verbessertes Verfahren zur zustandsbasierten Instandhaltung und ein verbessertes System zur zustandsbasieren Instandhaltung bereitzustellen, welches eine genauere Bestimmung der für die zustandsbasierten Instandhaltung relevanten Größen erlaubt.

Bezogen auf ein Verfahren zur zustandsbasierten Instandhaltung einer Zugangsvorrichtung eines Fahrzeugs wird diese Aufgabe durch die Merkmale des Anspruchs 1 gelöst. Bezogen auf ein System zur zustandsbasierten Instandhaltung einer Zugangsvorrichtung eines Fahrzeugs wird diese Aufgabe durch die Merkmale des Anspruchs 15 gelöst.

Die Erfindung geht von der Erkenntnis aus, dass die für die Bestimmung des Drehmoments aus der elektrischen Leistung wichtige Größe der Wirkungsgrad des Motors ist. Dieser Wirkungsgrad lässt sich zwar nicht praktisch im relevanten Augenblick direkt messen, doch kann eine Wirkungsgradkurve zur Bestimmung des Wirkungsgrads vorab ermittelt und in dem System hinterlegt werden. Diese Wirkungsgradkurve wiederum kann eine Parametrierung durch eine elektrische Betriebsgröße aufweisen. Auf diese Weise lässt sich auch im laufenden Betrieb anhand der jeweiligen, direkt messbaren elektrischen Betriebsgröße der Wirkungsgrad aus der Wirkungsgradkurve ablesen und auf diese Weise das Drehmoment ermitteln. Spitzen im Drehmoment, welche ein erhebliches Risiko für eine Beschädigung des Motors darstellen, können auf diese Weise genauer erkannt werden.

Das vorschlagsgemäße Verfahren dient zur zustandsbasierten Instandhaltung einer Zugangsvorrichtung eines Fahrzeugs, wobei es sich bei dem Fahrzeug insbesondere um ein Fahrzeug des öffentlichen Personenverkehrs handeln kann. Vorschlagsgemäß wird ein bewegliches Element der Zugangsvorrichtung durch einen elektrischen Motor der Zugangsvorrichtung verstellt, wobei eine Geschwindigkeit des beweglichen Elements und mindestens eine elektrische Betriebsgröße des Motors bei der Verstellung des beweglichen Elements ermittelt wird. Insbesondere kann die Geschwindigkeit des beweglichen Elements und die mindestens eine elektrische Betriebsgröße gemessen werden.

Die Geschwindigkeit des beweglichen Elements kann einerseits durch eine direkte Ermittlung dieser Geschwindigkeit ermittelt werden. Andererseits kann die Geschwindigkeit des beweglichen Elements auch dadurch ermittelt werden, dass eine andere Geschwindigkeit ermittelt wird, welche mit der Geschwindigkeit des beweglichen Elements in einem bekannten und insbesondere in einem festen Verhältnis steht. So kann es sein, dass eine Geschwindigkeit des elektrischen Motors bei der Verstellung des beweglichen Elements ermittelt wird. Diese Geschwindigkeit des elektrischen Motors kann durch eine Getriebeübersetzung in einem festen Verhältnis zu der Geschwindigkeit des beweglichen Elements stehen. Insbesondere kann es sich bei der Geschwindigkeit des elektrischen Motors um eine Winkelgeschwindigkeit handeln oder sogar um eine Drehfrequenz handeln.

Vorschlagsgemäß wird basierend auf der ermittelten Geschwindigkeit, der ermittelten mindestens einen elektrischen Betriebsgröße und mindestens einer vordefinierten Wirkungsgradkurve des Motors ein von dem Motor bei der Verstellung abgegebenes Drehmoment ermittelt und basierend auf dem ermittelten Drehmoment ein Zustand des Motors bestimmt. Unter einer Wirkungsgradkurve im vorliegenden Sinne wird grundsätzlich eine Abbildung zwischen einem Wirkungsgrad des Motors und einer im Grunde beliebigen Größe verstanden. Spezifische Beispiele für eine solche Größen werden untenstehend aufgeführt.

Es muss sich bei einer solchen Wirkungsgradkurve nicht um eine Kurve im engeren Sinne handeln. Insbesondere kann es sein, dass die Wirkungsgradkurve eine solche Abbildung nur für diskrete Werte der jeweiligen Größe bildet. Die Wirkungsgradkurve muss also nicht kontinuierlich für alle Werte der jeweiligen Grö-ße definiert sein. Die mindestens eine Wirkungsgradkurve ist vordefiniert in dem Sinne, dass sie bereits vor der Verstellung des beweglichen Elements und der Messung der elektrischen Betriebsgröße und der Geschwindigkeit bekannt ist.

Bei der Zugangsvorrichtung kann es sich insbesondere um ein Türsystem handeln, wobei dann das bewegliche Element ein Türflügel sein kann. Ebenso kann es sich bei der Zugangsvorrichtung um ein Schiebetrittsystem handeln, wobei in diesem Fall das bewegliche Element ein Schiebetritt sein kann.

Grundsätzlich kann es sich bei der mindestens einen elektrischen Betriebsgröße um eine beliebige elektrische Größe handeln. Eine bevorzugte Ausführungsform des vorschlagsgemäßen Verfahrens ist dadurch gekennzeichnet, dass die mindestens eine elektrische Betriebsgröße einen von dem Motor bei der Verstellung aufgenommenen Strom, eine bei der Verstellung an dem Motor anliegende Spannung und/oder eine bei der Verstellung von dem Motor aufgenommene elektrische Leistung umfasst.

Grundsätzlich kann der Zustand des Motors als ein Zustand von beliebig vielen möglichen Zuständen des Motors bestimmt werden. Ein solcher Zustand des Motors kann auch einer Zahlenangabe entsprechen. Ebenso kann es sein, dass ein Zustand von nur zwei möglichen Zuständen des Motors bestimmt wird, beispielsweise "Zustand OK" einerseits und "Zustand nicht OK" andererseits. Denkbar wären auch die beiden möglichen Zustände "Wartung erforderlich" und "Wartung nicht erforderlich". Ebenso kann es sein, dass der Zustand des Motors eine projizierte Zeit bis zu einem Ausfall, ggf. zusammen mit einer Wahrscheinlichkeits- oder Genauigkeitsabschätzung umfasst.

Eine weitere bevorzugte Ausführungsform des vorschlagsgemäßen Verfahrens ist dadurch gekennzeichnet, dass wenn ein Warnzustand als Zustand des Motors bestimmt wird, ein Warnsignal ausgelöst wird. Grundsätzlich kann jeder bestimmte Zustand des Motors, welcher zum Auslösen des Warnsignals führt, als Warnzustand im vorliegenden Sinne verstanden werden. Die Auslösung des Warnsignals kann dabei eine im Grunde beliebige Folge auslösen. Bevorzugt ist, dass das ausgelöste Warnsignal in einem Datenspeicher abgelegt und/oder an einen Zentralrechner vorzugsweise drahtlos übertragen wird. Ebenso kann es sein, dass das ausgelöste Warnsignal zu einer optischen und/oder akustischen Warnausgabe führt.

Grundsätzlich kann der Zusammenhang zwischen dem ermittelten Drehmoment und der Bestimmung des Zustands beliebig sein. Gemäß einer bevorzugten Ausführungsform des vorschlagsgemäßen Verfahrens ist vorgesehen, dass das ermittelte Drehmoment mit einem Drehmomentgrenzwert verglichen wird und dass der Zustand des Motors basierend auf dem Vergleich bestimmt wird. Hier ist es weiter bevorzugt, dass bei einem Überschreiten des Drehmomentgrenzwertes durch das ermittelte Drehmoment der Warnzustand als Zustand des Motors bestimmt wird. Es kann auch sein, dass ein Absolutbetrag des ermittelten Drehmoments mit dem Drehmomentgrenzwert verglichen wird.

Grundsätzlich kann es sein, dass für die Geschwindigkeit und für die mindestens eine elektrische Betriebsgröße nur ein einzelner Momentwert aufgenommen wird, wobei dieser einzelne Momentwert etwa dem zeitlichen Augenblick der maximalen aufgenommenen elektrischen Leistung oder dem zeitlichen Augenblick der maximalen Geschwindigkeit entsprechen kann. Gemäß einer weiteren bevorzugten Ausführungsform des vorschlagsgemäßen Verfahrens ist vorgesehen, dass ein zeitlicher Verlauf der Geschwindigkeit, der mindestens einen elektrischen Betriebsgröße und des Drehmoments ermittelt wird. Vorzugsweise wird dann der zeitliche Verlauf des ermittelten Drehmoments mit dem Drehmomentgrenzwert verglichen. Zur Bestimmung des Zustands des Motors kann dann einerseits geprüft werden, ob im zeitlichen Verlauf überhaupt ein Überschreiten des Drehmomentgrenzwertes erfolgt. Andererseits kann geprüft werden, für welchen Zeitraum ein solches Überschreiten erfolgt.

Eine bevorzugte Ausführungsform des vorschlagsgemäßen Verfahrens ist dadurch gekennzeichnet, dass die mindestens eine Wirkungsgradkurve eine Abbildung zwischen einem Wirkungsgrad des Motors sowie der mindestens einen elektrischen Betriebsgröße definiert. Damit hängt der Wirkungsgrad des Motors jedenfalls auch von der mindestens einen elektrischen Betriebsgröße ab. Bevorzugt ist weiter, dass die mindestens eine Wirkungsgradkurve eine Abbildung zwischen dem Wirkungsgrad des Motors und dem von dem Motor bei der Verstellung aufgenommenen Strom, der bei der Verstellung an dem Motor anliegenden Spannung und/oder der bei der Verstellung von dem Motor aufgenommenen elektrischen Leistung definiert.

Es kann sein, dass nur eine einzelne solche Wirkungsgradkurve verwendet wird. Eine weitere bevorzugte Ausführungsform des vorschlagsgemäßen Verfahrens ist dadurch gekennzeichnet, dass die mindestens eine Wirkungsgradkurve eine Kurvenschar von Wirkungsgradkurven umfasst. Anders ausgedrückt hängt es dann von einem Parameter ab, welche der Wirkungsgradkurven der Kurvenschar anzuwenden ist. Eine bevorzugte Variante sieht, dass die Wirkungsgradkurven der Kurvenschar jeweils eine Abbildung zwischen dem Wirkungsgrad des Motors und dem von dem Motor bei der Verstellung aufgenommenen Strom definieren. Anders ausgedrückt hängt - nach Auswahl der anzuwendenden Wirkungsgradkurve der Schar - dann der Wirkungsgrad von dem aufgenommenen Strom ab.

Bevorzugt ist weiter, dass die Wirkungsgradkurven der Kurvenschar durch die bei der Verstellung an dem Motor anliegende Spannung parametriert sind. Damit wird die spezielle Wirkungsgradkurve der Kurvenschar basierend auf der bei der Verstellung an dem Motor anliegenden Spannung ausgewählt. Grundsätzlich kann die mindestens eine Wirkungsgradkurve beliebigen Ursprungs und damit auf im Grunde beliebige Art erzeugt sein. Bevorzugt ist, dass die mindestens eine Wirkungsgradkurve durch eine Vielzahl von Versuchsreihen ermittelt wird. Es kann also experimentell an einem Motor vom Typ des Motors der Zugangsvorrichtung ermittelt werden, wie der Wirkungsgrad von den betreffenden Größen abhängt.

Gemäß einer bevorzugten Ausführungsform des vorschlagsgemäßen Verfahrens ist vorgesehen, dass eine Rechenvorrichtung das von dem Motor bei der Verstellung abgegebene Drehmoment ermittelt und den Zustand des Motors bestimmt. Damit kann das Drehmoment lokal - also in einer lokalen Rechenvorrichtung - ermittelt sowie der Zustand des Motors lokal bestimmt werden. Grundsätzlich können die für die Ermittlung des Drehmoments und für die Bestimmung des Zustands erforderlichen Rechenoperationen auch entfernt von der Zugangsvorrichtung und auch entfernt von dem Fahrzeug durchgeführt werden. Vorzugsweise ist die Rechenvorrichtung an dem Fahrzeug angeordnet.

Grundsätzlich kann es sein, dass der Motor mit einer beliebigen Art von Spannung betrieben wird, so etwa mit einer Wechselspannung. Gemäß einer weiteren bevorzugten Ausführungsform des vorschlagsgemäßen Verfahrens ist jedoch vorgesehen, dass der Motor zum Antrieb durch Gleichspannung eingerichtet ist. Vorzugsweise ist die bei der Verstellung an dem Motor anliegende Spannung eine Gleichspannung. Insbesondere kann es sein, dass der Motor eine Gleichstrommaschine oder ein bürstenloser Gleichstrommotor ist.

Es kann sein, dass der Zustand des Motors ausschließlich basierend auf dem ermittelten Drehmoment bestimmt wird. Es ist aber auch möglich, dass weitere Gesichtspunkte in die Bestimmung des Zustands des Motors einfließen. Eine bevorzugte Ausführungsform des vorschlagsgemäßen Verfahrens ist dadurch gekennzeichnet, dass der Zustand des Motors auch basierend auf einem Vergleich der mindestens einen elektrischen Betriebsgröße mit einem Grenzwert bestimmt wird. Hier kann es insbesondere sein, dass der Zustand des Motors auch basierend auf einem Vergleich des bei der Verstellung aufgenommenen Stroms mit einem Stromgrenzwert bestimmt wird. Speziell kann ein Absolutbetrag des bei der Verstellung aufgenommenen Stroms mit dem Stromgrenzwert verglichen werden. Denn das Überschreiten eines solchen Stromgrenzwerts ist ebenfalls ein wichtiges Indiz für eine Zustandsverschlechterung des Motors. Vorzugsweise entspricht der Stromgrenzwert einem Entmagnetisierungsgrenzwert des Motors. Insbesondere kann es sein, dass bei einem Überschreiten des Stromgrenzwerts durch den Strom der Warnzustand als Zustand des Motors bestimmt wird.

Eine weitere bevorzugte Ausführungsform des vorschlagsgemäßen Verfahrens ist dadurch gekennzeichnet, dass mindestens eine Ist-Temperatur des Motors ermittelt wird und dass basierend auf der mindestens einen Ist-Temperatur ein Zustand des Motors bestimmt wird.

Dabei kann es sein, dass die Ist-Temperatur nicht direkt gemessen, sondern vielmehr indirekt ermittelt wird. Gemäß einer bevorzugten Ausführungsform des vorschlagsgemäßen Verfahrens ist vorgesehen, dass die mindestens eine Ist-Temperatur basierend auf der bei der Verstellung von dem Motor aufgenommenen elektrischen Leistung ermittelt wird. Diesem Ansatz liegt die Erkenntnis zugrunde, dass der nicht in Bewegungsenergie umgewandelte Teil der aufgenommenen elektrischen Leistung zu einer Temperaturerhöhung des Motors führt.

Daher ist hier weiter bevorzugt vorgesehen, dass die mindestens eine Ist-Temperatur basierend auf der bei der Verstellung von dem Motor aufgenommenen elektrischen Leistung und einem Wärmewiderstand eines Teils des Motors ermittelt wird. Grundsätzlich kann dieser Wärmewiderstand auf beliebige Art und Weise ermittelt worden sein. Insbesondere kann es sein, dass der Wärmewiderstand durch mindestens eine Versuchsreihe ermittelt wurde. Bei dem Wärmewiderstand kann es sich um einen Wärmewiderstand zwischen im Grunde beliebigen Teilen des Motors untereinander oder mit der Umgebungsluft handeln.

Grundsätzlich kann es sich bei der Ist-Temperatur des Motors um die Temperatur eines beliebigen Teils des Motors handeln. Gemäß einer weiteren bevorzugten Ausführungsform des vorschlagsgemäßen Verfahrens ist vorgesehen, dass die mindestens eine Ist-Temperatur des Motors eine Gehäusetemperatur eines Gehäuses des Motors umfasst.

Eine bevorzugte Ausführungsform des vorschlagsgemäßen Verfahrens ist dadurch gekennzeichnet, dass die mindestens eine Ist-Temperatur des Motors eine Wicklungstemperatur von Wicklungen des Motors umfasst.

Das vorschlagsgemäße System dient der zustandsbasierten Instandhaltung einer Zugangsvorrichtung eines Fahrzeugs, und zwar insbesondere eines Fahrzeugs des öffentlichen Personenverkehrs.

Das vorschlagsgemäße System umfasst die Zugangsvorrichtung, wobei die Zugangsvorrichtung ein bewegliches Element, einen elektrischen Motor zur Verstellung des beweglichen Elements und eine Rechenvorrichtung zur Ermittlung einer Geschwindigkeit des beweglichen Elements und mindestens einer elektrischen Betriebsgröße des Motors bei der Verstellung des beweglichen Elements aufweist.

Bei dem vorschlagsgemäßen System ist die Rechenvorrichtung zur Ermittlung eines von dem Motor bei der Verstellung abgegebenen Drehmoments basierend auf der ermittelten Geschwindigkeit, der ermittelten mindestens einen elektrischen Betriebsgröße und der mindestens einen vordefinierten Wirkungsgradkurve des Motors eingerichtet.

Bei dem vorschlagsgemäßen System ist die Rechenvorrichtung weiter dazu eingerichtet, basierend auf dem ermittelten Drehmoment einen Zustand des Motors zu bestimmen.

Merkmale, Eigenschaften und bevorzugte Ausgestaltungen des vorschlagsgemäßen Systems entsprechen denen des vorschlagsgemäßen Verfahrens und umgekehrt.

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch ein Fahrzeug mit einem Ausführungsbeispiel des vorschlagsgemäßen Systems zur Ausführung des vorschlagsgemäßen Verfahrens,
- Fig. 2: schematisch eine Kurvenschar von Wirkungsgradkurven eines Motors des Ausführungsbeispiels der Fig. 1 und
- Fig. 3: schematisch ein thermisches Modell zur Ermittlung von Temperaturen eines Motors des Ausführungsbeispiels der Fig. 1.

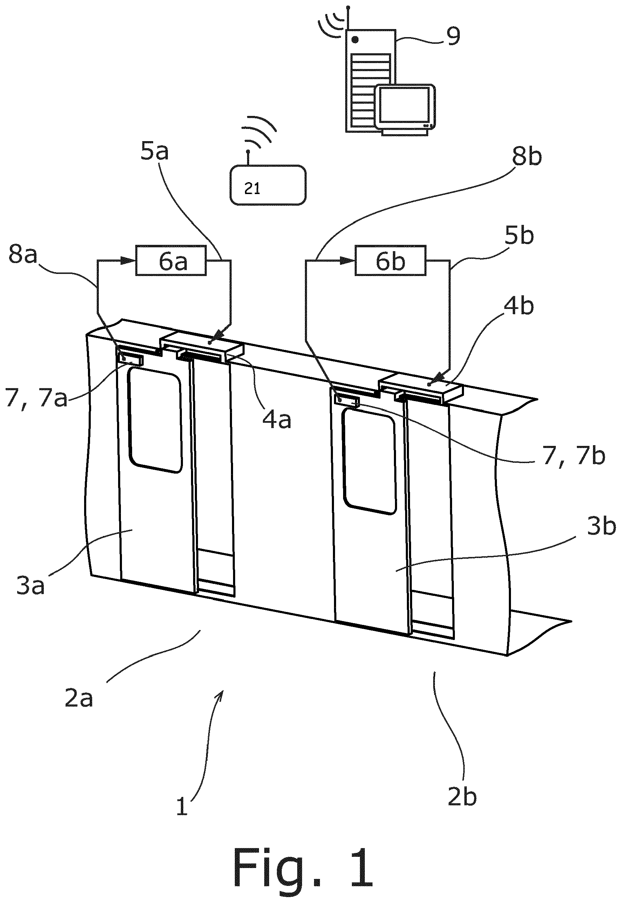

Bei dem in der Fig. 1 dargestellten Fahrzeug 1 handelt es sich um ein Schienenfahrzeug des öffentlichen Personenverkehrs mit einer Vielzahl von an dem Fahrzeug 1 befestigten Fahrgasttüren, von denen hier zwei beispielhaft als Zugangsvorrichtungen 2a, b wiedergegeben sind. Jede Zugangsvorrichtung 2a, b umfasst jeweils ein bewegliches Element 3a, b, bei welchem es sich hier um einen Türflügel handelt, und einen identischen elektrischen Motor 4a, b zum Verstellen des Türflügels. Bei den elektrischen Motoren 4a, handelt es sich jeweils um eine Gleichstrommaschine.

Die elektrischen Motoren 4a, b werden jeweils mit Steuersignalen 5a, b angesteuert, welche von einer jeweiligen elektronischen Steuervorrichtung 6a, b des Fahrzeugs 1 ausgehen. Im vorliegenden Fall umfassen die Steuersignale 5a, b eine an den Antrieb 4a, b anliegende Spannung 10, bei welcher es sich hier um eine Gleichspannung handelt, sowie digitale Kommunikationsbefehle an den Antrieb 4a, b. Diese Kommunikationsbefehle sind im Einzelnen vorliegend nicht weiter von Belang. Das Fahrzeug 1 weist ferner eine Messanordnung 7 mit einer jeweiligen Messvorrichtung 7a, b an jeder Zugangsvorrichtung 2a, b auf, welche Messvorrichtungen 7a, b jeweilige Messsignale 8a, b erzeugen und an die jeweilige Steuervorrichtung 6a, b übertragen. Diese Messsignale 8a, b beschreiben die gemessene Geschwindigkeit des jeweiligen beweglichen Elements 3a, b, den bei der Verstellung des jeweiligen beweglichen Elements 3a, b von dem Motor 4a, b aufgenommenen Strom 11 sowie die bei der Verstellung des jeweiligen beweglichen Elements 3a, b von dem Motor 4a, b aufgenommene Leistung 17. Grundsätzlich ließe sich diese aufgenommene Leistung 17 auch aus dem gemessenen Strom und der Motorspannung bestimmten. Die Messsignale 8a, b weisen nicht nur jeweils einen einzigen Wert für die genannten Größen auf, sondern beschreiben vielmehr einen jeweiligen zeitlichen Verlauf der genannten Größen. Ferner ist jede Steuervorrichtung 6a, b elektrisch mit einem hier nicht dargestellten Temperatursensor zur Ermittlung der Umgebungstemperatur 14 des Fahrzeugs 1 verbunden.

Eine zentrale und beabstandet zu dem Fahrzeug 1 angeordnete Rechenvorrichtung 9 steht mit den Steuervorrichtungen 6a, b über eine zelluläres Datennetzwerk 21 in nachrichtentechnischer Verbindung.

In verschiedenen Situationen des Fahrzeugs 1, beispielsweise nach Einfahrt in einen Bahnhof, führen die beweglichen Elemente 3a, b der Fahrgasttüren Öffnungs- und Schließbewegungen durch. Diese werden von jeweiligen elektrischen Motoren 4a, b angetrieben, welcher wiederum von der jeweiligen Steuervorrichtung 6a, b angesteuert werden. Basierend auf diesen Vorgängen bestimmt die Rechenvorrichtung 9 einen Zustand für jeden elektrischen Motor 4a, b. Vorliegend wird lediglich zwischen einem OK-Zustand und einem Warnzustand des jeweiligen elektrischen Motors 4a, b unterschieden. Der Warnzustand zeigt an, dass bereits eine gewisse Degradation des elektrischen Motors 4a, b stattgefunden hat und dieser demnächst untersucht, gewartet oder ausgetauscht werden sollte. Im OK-Zustand sind hingegen solche Maßnahmen nicht erforderlich.

Die Rechenvorrichtung 9 nimmt die Bestimmung des jeweiligen Zustands der elektrischen Motoren 4a, b auf Grundlage der Daten vor, welche die Steuervorrichtungen 6a, b an die Rechenvorrichtung 9 übermitteln.

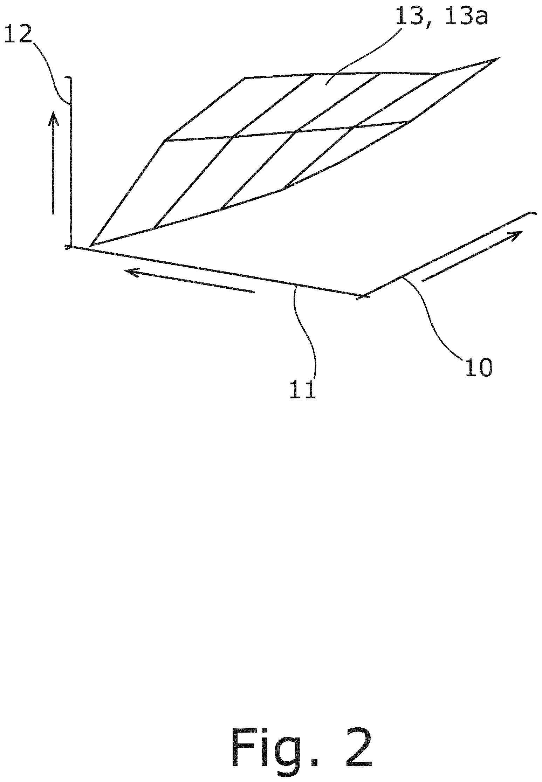

Zunächst bestimmt die Rechenvorrichtung 9 ein von dem jeweiligen Motor 4a, b abgegebenes Drehmoment. Dieses Drehmoment hängt in an sich bekannter Weise von der an dem Motor 4a,b anliegenden Spannung 10, von dem von dem Motor aufgenommenen Strom 11, von der Winkelgeschwindigkeit des Motors 4a, b - welche fest mit der Geschwindigkeit des beweglichen Elements 3a, b verknüpft ist - und dem Wirkungsgrad 12 des Motors 4a, b ab. Hierbei ergeben sich die ersten drei genannten Größen entweder direkt aus den Steuersignalen 5a, b und den Messsignalen 8a, b oder lassen sich durch Multiplikation mit einem konstanten Faktor ermitteln. Zur Ermittlung des Wirkungsgrads 12 greift die Rechenvorrichtung 9 auf den in der Fig. 2 dargestellten Funktionsgraphen 13 zurück, welcher den Zusammenhang zwischen der Spannung 10, dem Strom 11 und dem Wirkungsgrad 12 darstellt. Dabei kann der Funktionsgraph 13 als Kurvenschar 13a von einzelnen Wirkungsgradkurven verstanden werden, wobei die Kurvenschar 13a der Wirkungsgradkurven durch die Spannung 10 parametriert ist und wobei jede einzelne Wirkungsgradkurve den Zusammenhang zwischen Strom 11 und Wirkungsgrad 12 darstellt.

Auf diese Weise ermittelt die Rechenvorrichtung 9 das abgegebene Drehmoment für jeden elektrischen Motor 4a, b über die Zeit, wobei bei einem - ggf. auch nur kurzzeitigen - Überschreiten eines vordefinierten Drehmoment-Grenzwertes der Zustand des Motors 4a, b als Warnzustand bestimmt und ein entsprechendes Warnsignal in einem - hier nicht dargestellten - Speicher der Rechenvorrichtung 9 abgelegt wird.

Auch wenn das abgegebene Drehmoment den vordefinierten DrehmomentGrenzwert nicht überschreiten sollte gibt es zwei weitere Prüfungen welche dazu führen können, dass der Zustand des Motors 4a, b als Warnzustand bestimmt wird.

Die erste dieser Prüfungen vergleicht den von dem jeweiligen Motor 4a, b aufgenommenen Strom 11 mit einem Entmagnetisierungsgrenzwert des Motors 4a, b, wobei also bei einem Überschreiten des Entmagnetisierungsgrenzwerts ebenfalls der Zustand des Motors 4a, b als Warnzustand 4a, b bestimmt wird.

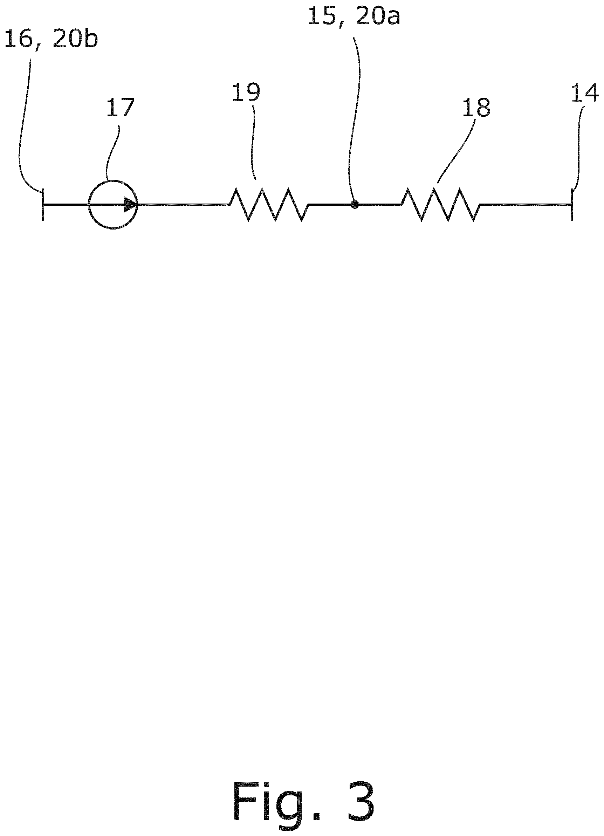

Die zweite dieser Prüfung ermittelt sowohl eine Gehäusetemperatur 15 des Motors 4a, b - welche eine erste Ist-Temperatur 20a bildet - als auch eine Wicklungstemperatur 16 des Motors 4a, b, die eine zweite Ist-Temperatur 20b bildet. Der modellhafte Zusammenhang zwischen diesen beiden Temperaturen und der Umgebungstemperatur 14 sowie der von dem Motor aufgenommenen elektrischen Leistung 17, dem ersten Wärmewiderstand 18 zwischen der Umgebungstemperatur 14 und der Gehäusetemperatur 15 sowie dem zweiten Wärmewiderstand 19 zwischen Gehäusetemperatur 15 und der Leistung 17 ist in der Fig. 3 dargestellt. In dem Modell der Fig. 3 werden übrigens thermische Kapazitäten vernachlässigt. Die beiden Wärmewiderstände 18, 19 werden durch Messreihen ermittelt. Mit den Wärmewiderständen 18, 19 können dann sowohl die Gehäusetemperatur 15 als auch die Wicklungstemperatur 16 ermittelt werden. Übersteigt eine dieser beiden Ist-Temperaturen 20a, b für einen der Motoren 4a, b einen jeweiligen Grenzwert, so wird ebenfalls ein Warnzustand als Zustand des Motors 4a, b bestimmt.

## Patentansprüche

1. Verfahren zur zustandsbasierten Instandhaltung einer Zugangsvorrichtung (2a, b) eines Fahrzeugs (1), insbesondere eines Fahrzeugs (1) des öffentlichen Personenverkehrs, wobei ein bewegliches Element (3a, b) der Zugangsvorrichtung (2a, b) durch einen elektrischen Motor (4a, b) der Zugangsvorrichtung (2a, b) verstellt wird, wobei eine Geschwindigkeit des beweglichen Elements (3a, b) und mindestens eine elektrische Betriebsgröße des Motors (4a, b) bei der Verstellung des beweglichen Elements (3a, b) ermittelt wird, **dadurch gekennzeichnet, dass** basierend auf der ermittelten Geschwindigkeit, der ermittelten mindestens einen elektrischen Betriebsgrö-ße und mindestens einer vordefinierten Wirkungsgradkurve des Motors (4a, b) ein von dem Motor (4a, b) bei der Verstellung abgegebenes Drehmoment ermittelt wird und wobei basierend auf dem ermittelten Drehmoment ein Zustand des Motors (4a, b) bestimmt wird.

2. Verfahren nach Anspruch 1, **dadurch gekennzeichnet, dass** die mindestens eine elektrische Betriebsgröße einen von dem Motor (4a, b) bei der Verstellung aufgenommenen Strom (11), eine bei der Verstellung an dem Motor (4a, b) anliegende Spannung (10) und/oder eine bei der Verstellung von dem Motor (4a, b) aufgenommene elektrische Leistung (17) umfasst.

3. Verfahren nach Anspruch 1 oder 2, **dadurch gekennzeichnet, dass** wenn ein Warnzustand als Zustand des Motors (4a, b) bestimmt wird, ein Warnsignal ausgelöst wird, vorzugsweise, dass das ausgelöste Warnsignal in einem Datenspeicher abgelegt und/oder an einen Zentralrechner vorzugsweise drahtlos übertragen wird.

4. Verfahren nach einem der Ansprüche 1 bis 3, **dadurch gekennzeichnet, dass** das ermittelte Drehmoment mit einem Drehmomentgrenzwert verglichen wird und dass der Zustand des Motors (4a, b) basierend auf dem Vergleich bestimmt wird, vorzugsweise, dass bei einem Überschreiten des Drehmomentgrenzwertes durch das ermittelte Drehmoment der Warnzustand als Zustand des Motors (4a, b) bestimmt wird.

5. Verfahren nach einem der Ansprüche 1 bis 4, **dadurch gekennzeichnet, dass** ein zeitlicher Verlauf der Geschwindigkeit, der mindestens einen elektrischen Betriebsgröße und des Drehmoments ermittelt wird, vorzugsweise, dass der zeitliche Verlauf des ermittelten Drehmoments mit dem Drehmomentgrenzwert verglichen wird.

6. Verfahren nach einem der Ansprüche 1 bis 5, **dadurch gekennzeichnet, dass** die mindestens eine Wirkungsgradkurve eine Abbildung zwischen einem Wirkungsgrad des Motors (4a, b) sowie der mindestens einen elektrischen Betriebsgröße definiert, vorzugsweise, dass die mindestens eine Wirkungsgradkurve eine Abbildung zwischen dem Wirkungsgrad des Motors (4a, b) sowie dem von dem Motor (4a, b) bei der Verstellung aufgenommenen Strom (11), der bei der Verstellung an dem Motor (4a, b) anliegenden Spannung (10) und/oder der bei der Verstellung von dem Motor (4a, b) aufgenommenen elektrischen Leistung (17) definiert.

7. Verfahren nach Anspruch 6, **dadurch gekennzeichnet, dass** die mindestens eine Wirkungsgradkurve eine Kurvenschar (13a) von Wirkungsgradkurven umfasst, vorzugsweise, dass die Wirkungsgradkurven der Kurvenschar (13a) jeweils eine Abbildung zwischen dem Wirkungsgrad des Motors (4a, b) und dem von dem Motor (4a, b) bei der Verstellung aufgenommenen Strom (11) definieren, insbesondere, dass die Wirkungsgradkurven der Kurvenschar (13a) durch die bei der Verstellung an dem Motor (4a, b) anliegende Spannung (10) parametriert sind, weiter vorzugsweise, dass die mindestens eine Wirkungsgradkurve durch eine Vielzahl von Versuchsreihen ermittelt wird.

8. Verfahren nach einem der Ansprüche 1 bis 7, **dadurch gekennzeichnet, dass** vorzugsweise eine an dem Fahrzeug (1) angeordnete Rechenvorrichtung (9) das von dem Motor (4a, b) bei der Verstellung abgegebene Drehmoment ermittelt und den Zustand des Motors (4a, b) bestimmt.

9. Verfahren nach einem der Ansprüche 1 bis 8, **dadurch gekennzeichnet, dass** der Motor (4a, b) zum Antrieb durch Gleichspannung eingerichtet ist, vorzugsweise, dass die bei der Verstellung an dem Motor (4a, b) anliegende Spannung eine Gleichspannung ist, insbesondere, dass der Motor (4a, b) eine Gleichstrommaschine oder ein bürstenloser Gleichstrommotor ist.

10. Verfahren nach einem der Ansprüche 1 bis 9, **dadurch gekennzeichnet, dass** der Zustand des Motors (4a, b) auch basierend auf einem Vergleich der mindestens einen elektrischen Betriebsgröße mit einem Grenzwert bestimmt wird, vorzugsweise, dass der Zustand des Motors (4a, b) auch basierend auf einem Vergleich des bei der Verstellung aufgenommenen Stroms mit einem Stromgrenzwert bestimmt wird, weiter vorzugsweise, dass der Stromgrenzwert einem Entmagnetisierungsgrenzwert des Motors (4a, b) entspricht, insbesondere, dass bei einem Überschreiten des Stromgrenzwerts durch den Strom der Warnzustand als Zustand des Motors (4a, b) bestimmt wird.

11. Verfahren nach einem der Ansprüche 1 bis 10, **dadurch gekennzeichnet, dass** mindestens eine Ist-Temperatur (20a, b) des Motors (4a, b) ermittelt wird und dass basierend auf der mindestens einen Ist-Temperatur (20a, b) ein Zustand des Motors (4a, b) bestimmt wird.

12. Verfahren nach Anspruch 11, **dadurch gekennzeichnet, dass** die mindestens eine Ist-Temperatur (20a, b) basierend auf der bei der Verstellung von dem Motor (4a, b) aufgenommenen elektrischen Leistung (17) ermittelt wird, vorzugsweise, dass die mindestens eine Ist-Temperatur (20a, b) basierend auf der bei der Verstellung von dem Motor (4a, b) aufgenommenen elektrischen Leistung (17) und einem Wärmewiderstand (18, 19) eines Teils des Motors (4a, b) ermittelt wird, insbesondere, dass der Wärmewiderstand (18, 19) durch mindestens eine Versuchsreihe ermittelt wurde.

13. Verfahren nach Anspruch 11 oder 12, **dadurch gekennzeichnet, dass** die mindestens eine Ist-Temperatur (20a, b) des Motors (4a, b) eine Gehäusetemperatur eines Gehäuses des Motors (4a, b) umfasst.

14. Verfahren nach einem der Ansprüche 11 bis 13, **dadurch gekennzeichnet, dass** die mindestens eine Ist-Temperatur (20a, b) des Motors (4a, b) eine Wicklungstemperatur von Wicklungen des Motors (4a, b) umfasst.

15. System zur zustandsbasierten Instandhaltung einer Zugangsvorrichtung (2a, b) eines Fahrzeugs (1), insbesondere eines Fahrzeugs (1) des öffentlichen Personenverkehrs, umfassend die Zugangsvorrichtung (2a, b), wobei die Zugangsvorrichtung (2a, b) ein bewegliches Element (3a, b), einen elektrischen Motor (4a, b) zur Verstellung des beweglichen Elements (3a, b) und eine Rechenvorrichtung (9) zur Ermittlung einer Geschwindigkeit des beweglichen Elements (3a, b) und mindestens einer elektrischen Betriebsgröße des Motors (4a, b) bei der Verstellung des beweglichen Elements (3a, b), **dadurch gekennzeichnet, dass** die Rechenvorrichtung (9) zur Ermittlung eines von dem Motor (4a, b) bei der Verstellung abgegebenen Drehmoments basierend auf der ermittelten Geschwindigkeit, der ermittelten mindestens einen elektrischen Betriebsgröße und der mindestens einen vordefinierten Wirkungsgradkurve des Motors (4a, b) eingerichtet ist und dazu eingerichtet ist, basierend auf dem ermittelten Drehmoment einen Zustand des Motors (4a, b) zu bestimmen.

## Claims

1. A method for status-based maintenance of an access device (2a, b) of a vehicle (1), in particular of a public transport vehicle (1), wherein a movable element (3a, b) of the access device (2a, b) is moved by an electric motor (4a, b) of the access device (2a, b), wherein a speed of the movable element (3a, b) and at least one electric operating parameter of the motor (4a, b) is established on the movement of the movable element (3a, b), **characterized in that**, based on the established speed, the established at least one electric operating parameter and at least one predefined efficiency curve of the motor (4a, b) a torque, delivered by the motor (4a, b) on movement, is established, and wherein based on the established torque a status of the motor (4a, b) is determined.

2. The method according to Claim 1, **characterized in that** the at least one electric operating parameter comprises a current (11) received by the motor (4a, b) on movement, a voltage (10) applied at the motor (4a, b) on movement, and/or an electric power (17) received by the motor (4a, b) on movement.

3. The method according to Claim 1 or 2, **characterized in that** when a warning status is determined as status of the motor (4a, b), a warning signal is triggered, preferably, that the triggered warning signal is deposited in a data memory and/or is transmitted preferably wirelessly to a central computer.

4. The method according to one of Claims 1 to 3, **characterized in that** the determined torque is compared to a torque threshold vale, and that the status of the motor (4a, b) is determined based on the comparison, preferably, that on an exceeding of the torque threshold value by the established torque, the warning status is determined as status of the motor (4a, b) .

5. The method according to one of Claims 1 to 4, **characterized in that** a chronological profile of the speed, of the at least one electric operating parameter and of the torque is established, preferably, that the chronological profile of the established torque is compared to the torque threshold value.

6. The method according to one of Claims 1 to 5, **characterized in that** the at least one efficiency curve defines a mapping between an efficiency of the motor (4a, b) and the at least one electric operating parameter, preferably, that the at least one efficiency curve defines a mapping between the efficiency of the motor (4a, b) and the current (11) received by the motor (4a, b) on movement, the voltage (10) applied at the motor (4a, b) on movement, and/or the electric power (17) received by the motor (4a, b) on movement.

7. The method according to Claim 6, **characterized in that** the at least one efficiency curve comprises a curve set (13a) of efficiency curves, preferably, that the efficiency curves of the curve set (13a) respectively define a mapping between the efficiency of the motor (4a, b) and the current (11) received by the motor (4a, b) on movement, in particular, that the efficiency curves of the curve set (13a) are parameterized by the voltage (10) applied at the motor (4a, b) on movement, further preferably that the at least one efficiency curve is established by a plurality of test series.

8. The method according to one of Claims 1 to 7, **characterized in that** preferably a computing device (9) arranged at the vehicle (1) establishes the torque delivered by the motor (4a, b) on movement and determines the status of the motor (4a, b).

9. The method according to one of Claims 1 to 8, **characterized in that** the motor (4a, b) is arranged for drive by DC voltage, preferably, that the voltage applied at the motor (4a, b) on movement is a DC voltage, in particular, that the motor (4a, b) is a DC machine or a brushless DC motor.

10. The method according to one of Claims 1 to 9, **characterized in that** the status of the motor (4a, b) is also determined based on a comparison of the at least one electric operating parameter to a threshold value, preferably, that the status of the motor (4a, b) is also determined on the basis of a comparison of the current received on movement to a current threshold value, further preferably, that the current threshold value corresponds to a demagnetization threshold value of the motor (4a, b), in particular, that on an exceeding of the current threshold value by the current, the warning status is determined as status of the motor (4a, b).

11. The method according to one of Claims 1 to 10, **characterized in that** at least one actual temperature (20a, b) of the motor (4a, b) is established and that a status of the motor (4a, b) is determined based on the at least one actual temperature (20a, b).

12. The method according to Claim 11, **characterized in that** the at least one actual temperature (20a, b) is established based on the electric power (17) received by the motor (4a, b) on movement, preferably, that the at least one actual temperature (20a, b) is established based on the electric power (17) received by the motor (4a, b) on movement and a thermal resistance (18, 19) of a part of the motor (4a, b), in particular, that the thermal resistance (18, 19) was established by at least one test series.

13. The method according to Claim 11 or 12, **characterized in that** the at least one actual temperature (20a, b) of the motor (4a, b) comprises a housing temperature of a housing of the motor (4a, b).

14. The method according to one of Claims 11 to 13, **characterized in that** the at least one actual temperature (20a, b) of the motor (4a, b) comprises a winding temperature of windings of the motor (4a, b).

15. A system for status-based maintenance of an access device (2a, b) of a vehicle (1), in particular of a public transport vehicle (1), comprising the access device (2a, b), wherein the access device (2a, b) comprises a movable element (3a, b), an electric motor (4a, b) for movement of the movable element (3a, b) and a computing device (9) for establishing a speed of the movable element (3a, b) and at least one electric operating parameter of the motor (4a, b) on the movement of the movable element (3a, b), **characterized in that** the computing device (9) is arranged for establishing a torque delivered by the motor (4a, b) on movement, based on the established speed, the established at least one electric operating parameter and the at least one predefined efficiency curve of the motor (4a, b), and is arranged, based on the established torque, to determine a status of the motor (4a, b) .

## Revendications

1. Procédé de maintenance basé sur l'état d'un dispositif d'accès (2a, b) d'un véhicule (1), en particulier d'un véhicule (1) de transports publics, sachant qu'un élément mobile (3a, b) du dispositif d'accès (2a, b) est déplacé par un moteur électrique (4a, b) du dispositif d'accès (2a, b), sachant qu'une vitesse de l'élément mobile (3a, b) et au moins une grandeur de fonctionnement électrique du moteur (4a, b) est déterminée lors du déplacement de l'élément mobile (3a, b), **caractérisé en ce qu'**un couple délivré par le moteur (4a, b) lors du déplacement est déterminé en se basant sur la vitesse déterminée, au moins la grandeur de fonctionnement électrique déterminée et au moins une courbe de rendement prédéfinie du moteur (4a, b) et sachant qu'un état du moteur (4a, b) est déterminé en se basant sur le couple déterminé.

2. Procédé selon la revendication 1, **caractérisé en ce qu'**au moins une grandeur de fonctionnement électrique comprend un courant (11) absorbé par le moteur (4a, b) lors du déplacement, une tension (10) appliquée au moteur (4a, b) et/ou une puissance électrique (17) absorbée par le moteur (4a, b) lors du déplacement.

3. Procédé selon la revendication 1 ou 2, **caractérisé en ce que** lorsqu'un état d'alerte est déterminé comme état du moteur (4a, b), un signal d'avertissement est déclenché, de préférence, **en ce que** le signal d'avertissement déclenché est déposé dans une mémoire de données et/ou est transmis de préférence sans fil à un ordinateur central.

4. Procédé selon l'une quelconque des revendications 1 à 3, **caractérisé en ce que** le couple déterminé est comparé à une valeur limite de couple et **en ce que** l'état du moteur (4a, b) est déterminé en se basant sur la comparaison, de préférence, **en ce que** l'état d'alerte est déterminé comme état du moteur (4a, b) lors d'un dépassement de la valeur limite de couple par le couple déterminé.

5. Procédé selon l'une quelconque des revendications 1 à 4, **caractérisé en ce qu'**une évolution dans le temps de la vitesse, d'au moins une grandeur de fonctionnement électrique et du couple est déterminée, de préférence, **en ce que** l'évolution dans le temps du couple déterminé est comparée à la valeur limite de couple.

6. Procédé selon l'une quelconque des revendications 1 à 5, **caractérisé en ce qu'**au moins une courbe de rendement définit une reproduction se situant entre un degré de rendement du moteur (4a, b) et au moins une grandeur de fonctionnement électrique, de préférence, **en ce qu'**au moins une courbe de rendement définit une reproduction se situant entre le rendement du moteur (4a, b) et le courant (11) absorbé par le moteur (4a, b) lors du déplacement, la tension (10) appliquée au moteur (4a, b) lors du déplacement et/ou la puissance électrique (17) absorbée par le moteur (4a, b) lors du déplacement.

7. Procédé selon la revendication 6, **caractérisé en ce qu'**au moins une courbe de rendement comprend une famille de courbes (13a) de courbes de rendement, de préférence, **en ce que** les courbes de rendement de la famille de courbes (13a) définissent respectivement une reproduction se situant entre le rendement du moteur (4a, b) et le courant (11) absorbé par le moteur (4a, b) lors du déplacement, en particulier, **en ce que** les courbes de rendement de la famille de courbes (13a) sont paramétrées par la tension (10) appliquée au moteur (4a, b) lors du déplacement, de préférence en plus, **en ce qu'**au moins une courbe de rendement est déterminée par une pluralité de séries d'essais.

8. Procédé selon l'une quelconque des revendications 1 à 7, **caractérisé en ce que** de préférence un dispositif de calcul (9) disposé sur le véhicule (1) détermine le couple délivré par le moteur (4a, b) lors du déplacement et détermine l'état du moteur (4a, b).

9. Procédé selon l'une quelconque des revendications 1 à 8, **caractérisé en ce que** le moteur (4a, b) est agencé pour entraîner par tension continue, de préférence, **en ce que** la tension appliquée au moteur (4a, b) lors du déplacement est une tension continue, en particulier, **en ce que** le moteur (4a, b) est une machine à courant continu ou un moteur à courant continu sans balais.

10. Procédé selon l'une quelconque des revendications 1 à 9, **caractérisé en ce que** l'état du moteur (4a, b) est déterminé en se basant également sur une comparaison d'au moins une grandeur de fonctionnement électrique avec une valeur limite, de préférence, **en ce que** l'état du moteur (4a, b) est déterminé en se basant également sur une comparaison du courant absorbé lors du déplacement à une valeur limite de courant, de préférence en plus, **en ce que** la valeur limite de courant correspond à une valeur limite de démagnétisation du moteur (4a, b), en particulier, **en ce que** l'état d'alerte est déterminé en tant qu'état du moteur (4a, b) en cas de dépassement par le courant de la valeur limite de courant.

11. Procédé selon l'une quelconque des revendications 1 à 10, **caractérisé en ce qu'**au moins une température réelle (20a, b) du moteur (4a, b) est déterminée et **en ce qu'**en se basant sur au moins une température réelle (20a, b) un état du moteur (4a, b) est déterminé.

12. Procédé selon la revendication 11, **caractérisé en ce qu'**au moins une température réelle (20a, b) est déterminée en se basant sur la puissance électrique (17) absorbée par le moteur (4a, b) lors du déplacement, de préférence **en ce qu'**au moins une température réelle (20a, b) est déterminée en se basant sur la puissance électrique (17) absorbée par le moteur (4a, b) lors du déplacement et une résistance thermique (18, 19) d'une partie du moteur (4a, b), en particulier **en ce que** la résistance thermique (18, 19) a été déterminée par au moins une série d'essais.

13. Procédé selon la revendication 11 ou 12, **caractérisé en ce qu'**au moins une température réelle (20a, b) du moteur (4a, b) comprend une température de carter d'un carter de moteur (4a, b).

14. Procédé selon l'une quelconque des revendications 11 à 13, **caractérisé en ce qu'**au moins une température réelle (20a, b) du moteur (4a, b) comprend une température de bobinage des bobinages du moteur (4a, b).

15. Système de maintenance basé sur l'état d'un dispositif d'accès (2a, b) d'un véhicule (1), en particulier d'un véhicule (1) de transports publics, comprenant le dispositif d'accès (2a, b), sachant que le dispositif d'accès (2a, b) comporte un élément mobile (3a, b), un moteur électrique (4a, b) pour déplacer l'élément mobile (3a, b) et un dispositif de calcul (9) pour déterminer une vitesse de l'élément mobile (3a, b) et au moins une grandeur de fonctionnement électrique du moteur (4a, b) lors du déplacement de l'élément mobile (3a, b), **caractérisé en ce que**
le dispositif de calcul (9) est agencé pour déterminer un couple délivré par le moteur (4a, b) lors du déplacement en se basant sur la vitesse déterminée, au moins une grandeur de fonctionnement électrique déterminée et au moins une courbe de rendement prédéfinie du moteur (4a, b) et est agencé pour déterminer un état du moteur (4a, b) en se basant sur le couple déterminé.
